# FASCICULE DE BREVET EUROPEEN

(11) **EP 1 639 875 B1**
(45) Date de publication et mention de la délivrance du brevet: **20.03.2013**
(21) Numéro de dépôt: 05108431.7
(22) Date de dépôt: 14.09.2005
(51) Int. Cl.: A01B 3/46

(54) **Charrue semi-portée comportant un dispositif réglable à mémoire**
Aufsattel-Pflug mit einer verstellbaren Vorrichtung mit Speicher
Semi-mounted plough comprising an adjustable device with memory

(30) Priorité: 28.09.2004 FR 0452181
(43) Date de publication de la demande: 29.03.2006
(73) Titulaire: Kuhn-Huard S.A., 44142 Châteaubriant Cedex (FR)
(72) Inventeur: Paugam, Denis, 44110 Châteaubriant (FR); Toublanc, Sylvain, 44110 Châteaubriant (FR)
(74) Mandataire: Esch, Esther Evelyne

(56) Documents cités:
- EP-A- 0 318 391
- EP-A- 0 951 811
- FR-A- 2 777 736
- US-A- 4 646 849

## Description

La présente invention se rapporte au domaine technique général du machinisme agricole. Elle concerne les charrues de grande longueur et en particulier les charmes semi-portées réversibles comprenant un avant-train raccordé à un arrière-train, l'arrière-train comportant une poutre, avec des corps de labour qui est divisée en une partie avant et une partie arrière, et un dispositif de retournement.

D'une manière connue de l'homme de l'art, ladite partie arrière est liée à la partie avant au moyen d'une première articulation d'axe horizontal et transversal dans la configuration de travail, le pivotement autour de cette première articulation est contrôlé par un organe de commande, lequel est lié sur ladite partie avant et sur ladite partie arrière, l'organe de commande est piloté par l'intermédiaire d'un circuit hydraulique comportant au moins un distributeur.

La charrue semi-portée décrite dans le document FR 2 777 736 comporte un avant-train et un arrière-train dont la poutre se décompose en une partie avant et une partie arrière. La partie arrière est reliée à la partie avant au moyen d'une première articulation. Un organe de commande permet de régler la raideur de ladite première articulation. La liberté du mouvement de pivotement de la partie arrière par rapport à la partie avant autour de la première articulation est alors plus ou moins contrariée selon la configuration de la charrue et les conditions de travail.

Pour passer d'une position de travail à l'autre position en fin de champ, on procède au retournement de cette charrue connue. Lors du pivotement de l'arrière-train, on bloque la première articulation pour éviter que les corps de labour n'entrent en contact avec le sol et n'altèrent la charrue. Puis pour rendre la charrue à nouveau opérationnelle dans son autre position de travail, il faut libérer la première articulation pour que la partie arrière soit en mesure de suivre les ondulations du terrain. Pour cela, l'utilisateur doit insister sur l'organe de commande. Au début d'une nouvelle raie, l'utilisateur essaye de trouver un réglage de ladite première articulation dans lequel les corps de labour de la partie arrière travaillent correctement. L'utilisateur contrarie plus ou moins la flexibilité de la première articulation jusqu'à ce qu'il estime que la partie arrière puisse bien suivre les ondulations du terrain. Par ailleurs, il doit tâtonner afin de retrouver un réglage voisin de celui établit avant le retournement de la charrue. Ce réglage de la raideur doit être effectué rapidement après la mise en terre pour forcer les corps de la partie arrière à rentrer dans le sol afin d'obtenir un labour homogène par rapport aux corps de labour de la partie avant.

Après chaque retournement de l'arrière-train de la charrue, l'utilisateur renouvelle le réglage de la raideur de la première articulation. Il intervient donc sur l'organe de commande jusqu'à ce qu'il estime que la liberté de mouvement de la partie arrière lui permette de travailler correctement en observant le comportement des corps de labour arrière. Ce contrôle n'est pas du tout évident pour l'utilisateur car d'une part il doit conduire le tracteur et d'autre part la partie arrière de la charrue se trouve à une dizaine de mètres de la cabine du tracteur.

Avec une telle charrue semi-portée de grande longueur, il n'est donc pas facile de réaliser un labour homogène tout au long de la parcelle. En effet, le réglage de la raideur de la première articulation varie entre un passage de la charrue et son suivant. La partie arrière est alors plus ou moins libre de pivoter autour de ladite première articulation et la profondeur des sillons de labour n'est pas sensiblement identique entre les corps de labour de la partie avant et ceux de la partie arrière.

Dans des conditions sèches ou argileuses, les corps de labour de la partie arrière ont tendance à ne pas entrer en terre si la première articulation est libre. Si le mouvement de pivotement n'est pas contraint, la partie arrière reste alors hors du sol et entraîne une augmentation de la portion du sol non retournée encore pourvue de végétation. Dans ce cas, l'utilisateur devra, dans un premier temps, maintenir la première articulation raide pour contraindre les corps de la partie arrière à entrer en terre. Dans un deuxième temps, il lui faudra libérer la première articulation pour permettre à la partie arrière de suivre la surface du terrain.

De tels réglages de la raideur de la première articulation doivent donc être effectués après chaque retournement de l'arrière-train de la charrue en intervenant sur l'organe de commande. Ainsi après être simplement passé d'une position de travail à l'autre position de travail, l'utilisateur doit effectuer une multitude d'opérations de réglage et de contrôle qui ne lui permettent pas de se concentrer sur la conduite du tracteur. A ces différents inconvénients s'ajoutent aussi les pertes de temps dus aux réglages à chaque début de raie.

Le but de la présente invention est de remédier aux inconvénients de la charrue connue tout en veillant à obtenir une réalisation simple, fiable et peu chère. L'objet de l'invention est notamment de proposer un dispositif réglable à mémoire permettant de retrouver aisément le réglage de la liberté de pivotement de la partie arrière préalablement à un retournement de l'arrière-train de la charrue.

Conformément à la présente invention, ladite charrue se caractérise par le fait qu'il est prévu un dispositif réglable à mémoire permettant de définir une pression dans le circuit hydraulique et de mémoriser cette pression pour pouvoir la retrouver après chaque retournement de l'arrière-train, ledit dispositif réglable à mémoire comporte un limiteur de pression fixe, un distributeur à commande hydraulique et un limiteur de pression réglage.

Avec un tel dispositif de réglage à mémoire, l'utilisateur règle, en début de parcelle, l'organe de commande pour trouver la raideur de la première articulation à appliquer à la partie arrière afin d'obtenir un fonctionnement correct et adapté au type de sol. Ce réglage de la raideur est alors mémorisé et peut être retrouvé automatiquement après chaque retournement pour la nouvelle position de travail. On obtient ainsi un labour homogène entre les parties avant et arrière et tout au long de la parcelle. L'utilisateur n'est plus contraint d'adapter la raideur du pivotement de la partie arrière autour de la première articulation en début de chaque raie après retournement, mais il peut se concentrer sur la conduite du tracteur. Il bénéficie ainsi d'un confort au travail supplémentaire en retrouvant, automatiquement, le réglage établit préalablement, au départ de chaque nouvelle raie.

D'autres caractéristiques de l'invention apparaîtront dans la description suivante d'un exemple de réalisation non limitatif de l'invention représenté sur les dessins annexés sur lesquels :
- la figure 1 représente une vue de dessus d'une charrue semi-portée conforme à l'invention en position de travail,
- la figure 2 représente une vue latérale de détail d'une partie de l'arrière-train de la charrue de la figure 1 au travail,
- la **figure 3** représente une vue latérale, à une échelle plus grande, d'une partie de l'arrière-train de la charrue dont la partie avant est au travail et la partie arrière est relevée,
- la **figure 4** représente le circuit hydraulique de commande correspondant à la position de travail de la charrue de la figure 2,
- la **figure 5** représente le circuit hydraulique de commande avec le dispositif réglable à mémoire juste avant l'installation de la pression de tarage dans le circuit.

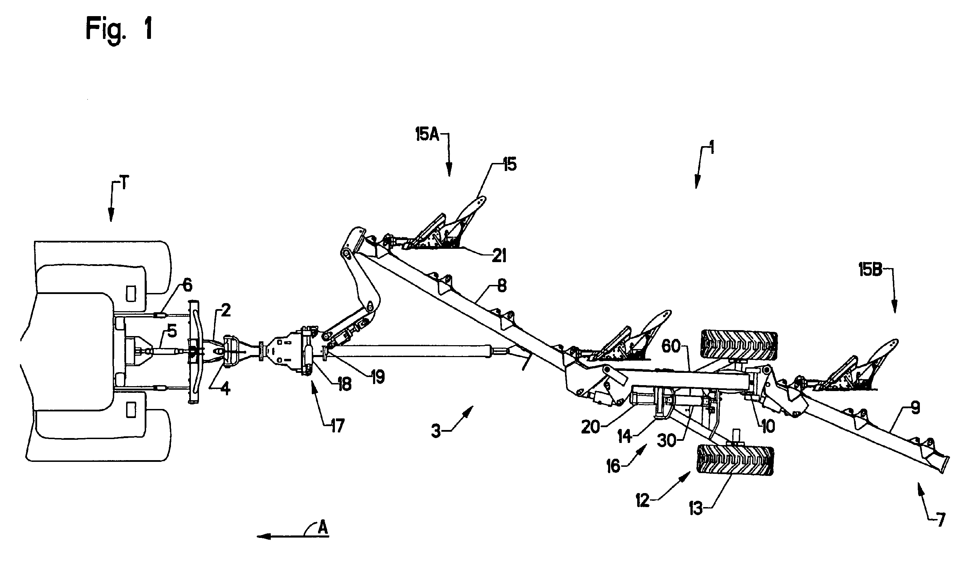

La charrue (1) selon l'invention représentée à la figure 1 est du type semi-portée, elle est soutenue à l'avant par le système de relevage d'un tracteur (T) et, à l'arrière par une ou deux roues. Ladite charme semi-portée (1) comprend un avant-train (2) destiné à être attelé au bras supérieur (5) et aux deux bras inférieurs (6) du système de relevage du tracteur (T). Elle comprend également un arrière-train (3) raccordé à l'avant-train (2) via une articulation du type cardan (4).

Ledit tracteur (T) permet ainsi de déplacer ladite charrue semi-portée (1) suivant une direction et un sens d'avance indiqué par la flèche (A). Dans la suite de la description, les notions "avant" et "arrière", "devant" et "derrière" sont définies par rapport au sens d'avance (A) et les notions "droite" et "gauche" sont définies en regardant ladite charrue (1) de l'arrière dans ledit sens d'avance (A).

D'une manière connue de l'homme de l'art, l'arrière-train (3) se compose globalement d'une poutre (7) divisée en une partie avant (8) et une partie arrière (9). La partie arrière (9) de la poutre (7) est reliée à la partie avant (8) au moyen d'une première articulation (10) dont l'axe est sensiblement vertical en position de transport et sensiblement horizontal en position de travail. Les détails concernant ladite première articulation (10) seront décrits plus loin.

Dans l'exemple de réalisation de la présente invention, la poutre (7) de ladite charrue (1) est supportée par un chariot (12) comportant deux roues (13). L'extrémité arrière de la partie avant (8) est aménagée pour recevoir ledit chariot (12). Lequel chariot (12) est lié à la poutre (7) au moyen d'une deuxième articulation (14) d'axe longitudinal sensiblement horizontal et perpendiculaire à la direction d'avance (A). Il est disposé sensiblement aux deux tiers de la longueur de la charrue (1). La charrue (1) de l'invention comporte sept corps de labour (15) répartis en un groupe avant (15A) et un groupe arrière (15B), le groupe avant (15A) comporte quatre corps et le groupe arrière (15B) comporte trois corps. On notera que pour des raisons de clarté et de simplification, certains corps de labour (15) n'ont été représentés et que seule la partie arrière du tracteur (T) est représentée.

D'une manière également connue, pour abaisser respectivement relever l'arrière-train (3) de la charme (1), on utilise un dispositif de relevage (16) interposé entre l'essieu du chariot (12) et ladite deuxième articulation (14). Lorsque le dispositif de relevage (16) est contracté, les roues (13) se rapprochent de la poutre (7) de façon suffisante pour permettre auxdits corps de labour (15), en position de travail, d'entrer dans le sol. Le déplacement de la charrue (1) dans le sens d'avance (A) provoquera alors la pénétration des corps de labour (15) dans le sol. En revanche, lorsque le dispositif de relevage (16) est en extension, l'écartement entre le sol et la poutre (7) est maximal, les corps de labour (15) ne sont plus en contact avec le sol mais à une certaine distance de sécurité.

La charrue semi-portée (1) représentée sur les figures est de type réversible. De ce fait, elle comporte notamment un bloc de retournement (17) et des corps de labour (15) constitués de socs à versoirs symétriques. Le bloc de retournement (17) est disposé à l'avant de l'arrière-train (3) et est composé de deux vérins de retournement (18). L'arrière-train (3) peut pivoter de 180°, soit d'un demi-tour, autour d'une troisième articulation (19) au moyen desdits vérins de retournement (18). La troisième articulation (19) est disposée à l'avant de l'arrière-train (3), elle présente un axe longitudinal sensiblement horizontal et dirigé suivant la direction d'avance (A). Le pivotement de l'arrière-train (3) est encore guidé par une quatrième articulation (20) disposée au niveau dudit chariot (12). Cette quatrième articulation (20) permet de lier ledit chariot (12) à ladite poutre (7). Elle est dirigée de façon à être parallèle aux contre seps (21) des corps de labour (15). En pivotant d'environ 180° autour desdites troisième et quatrième articulations (19, 20), la charrue (1) peut occuper au moins deux positions de travail. Par contre en ne pivotant que de 90°, ladite charrue (1) passe d'une des positions de travail à une position de transport.

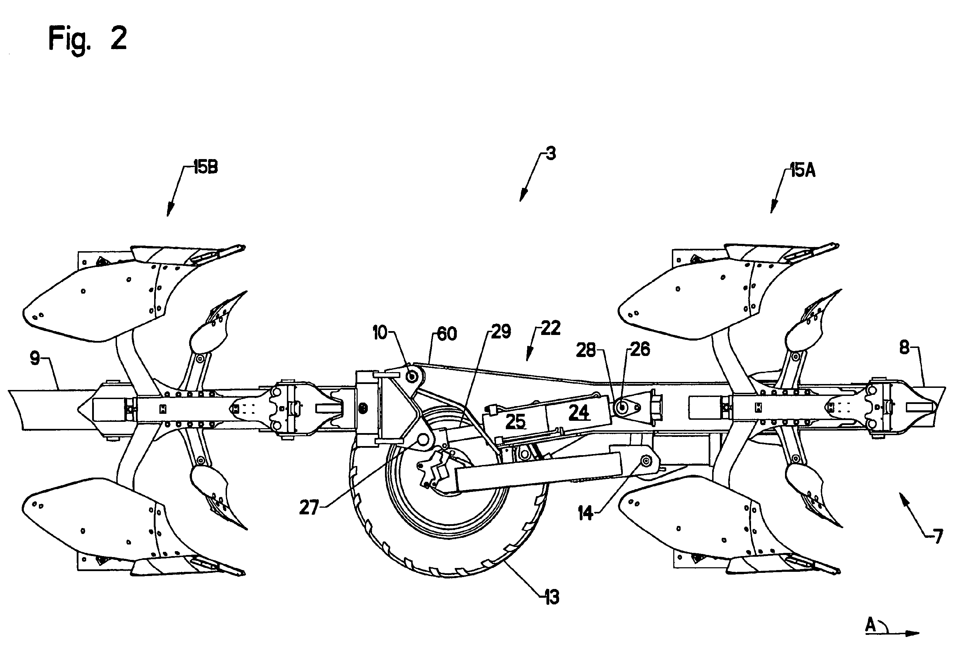

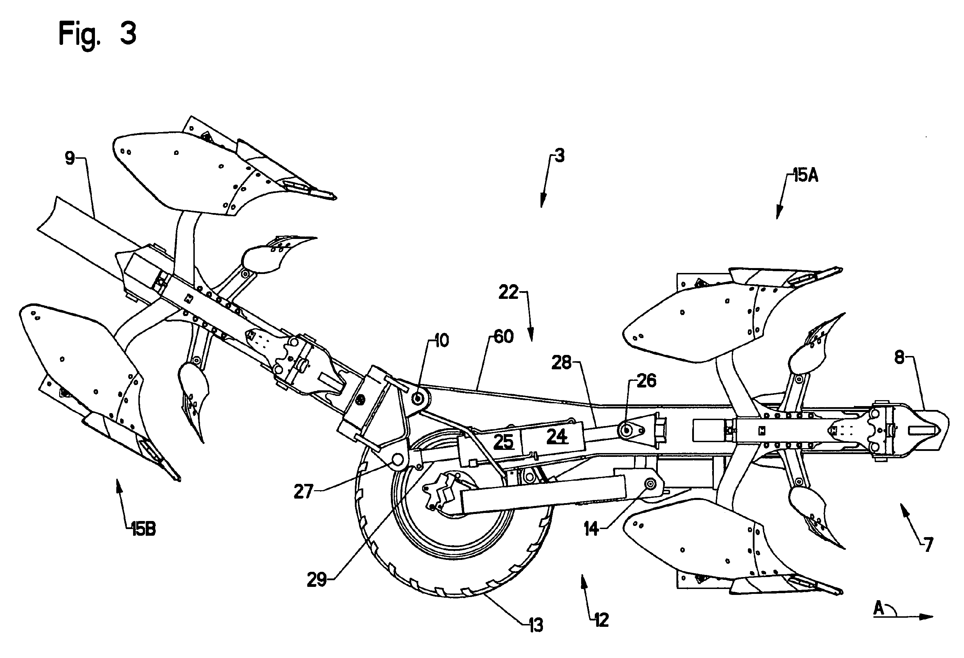

D'une manière connue, la première articulation (10) entre les parties avant et arrière (8, 9) permet, à cette charrue (1) de grande longueur, de mieux suivre les ondulations du terrain. Le terrage entre le groupe de socs arrière (15B) et le groupe de socs avant (15A) est alors sensiblement identique. Les figures 2 et 3 représentent, à une plus grande échelle, la liaison entre la partie avant (8) et la partie arrière (9). A la lumière de la figure 2, ladite première articulation (10) présente un axe transversal situé, lorsque la charrue (1) est en position normale de travail, dans un plan sensiblement horizontal, perpendiculaire au sens d'avancement (A) de la charrue (1). Un organe de commande (22) contrôle la raideur de la première articulation (10) et par conséquent contrôle le pivotement de la partie arrière (9) par rapport à ladite partie avant (8). L'organe de commande (22) peut aussi bloquer la première articulation (10) dans une position déterminée. La première articulation (10) est bloquée pendant les périodes de manoeuvres et notamment le retournement de la charrue (1). Pour amener la charrue (1) d'une position de travail à une autre position, l'arrière-train (3) pivote d'un demi-tour. Afin d'éviter une interférence des corps de labour (15) avec le sol, le pivotement de la partie arrière (9) autour de la première articulation (10) est bloqué au moyen dudit organe de commande (22). Lors du travail au contraire, le pivotement de ladite partie arrière (9) autour de la première articulation (10) est libre ce qui lui permet une adaptation fidèle aux dénivelés.

L'attelage, composé par le tracteur (T) et la charrue (1) de grande longueur de la figure 1, nécessite pour se réaligner une surface d'évolution importante. Pour ne pas augmenter la largeur des fourrières, les groupes de corps de labour avant et arrière (15A, 15B) entrent et sortent de terre à des moments différents. Une fourrière est une portion du sol non retournée en début et fin de raie, donc encore pourvue de végétation. En pratique, l'entrée en terre et respectivement la sortie de terre de la charrue (1) se font de manière progressive. Pour sortir de raie par exemple, l'utilisateur agit sur la commande de relevage du tracteur (T) faisant lever les bras (5, 6) et tout en continuant d'avancer, commande le dispositif de relevage (16) du chariot (12) pour effectuer une sortie de raie régulière et progressive des socs. Le relevage des bras (5, 6) puis le relevage du chariot (12), assurent une sortie de raie courte et propre. En sortie de raie, pendant que le groupe de socs avant (15A) sort de la terre, le groupe de socs arrière (15B) se maintient à la profondeur de travail, améliorant ainsi la finition des bouts de raie et raccourcissant les pointes. De manière connue en soi, le terrage des socs du groupe arrière (15B) est donné par une roue de régulation (non représentée) montée à l'extrémité de la partie arrière (9). Grâce à la première articulation (10), ladite charrue de grande longueur (1) a tendance à se comporter comme deux charrues pratiquement indépendantes. La figure 3 illustre, par exemple, l'entrée en terre des groupes de socs (15A, 15B) à des moments différents. Le groupe de socs avant (15A) est déjà dans sa position de travail alors que le groupe de corps arrière (15B) est encore relevé. Sur les figures 2 et 3, certains éléments de la charrue (1) ont été occultés pour mieux voir l'organe de commande (22).

Au début d'un champ, l'utilisateur adapte la raideur de la première articulation (10) en intervenant sur l'organe de commande (22). Il libère ou contraint le pivotement de la partie arrière (9) jusqu'à obtenir un fonctionnement correct de la partie arrière (9). Cette opération de réglage est appelée le tarage. L'état plutôt raide ou libre de la première articulation (10) influe également sur la profondeur de sillon du labour, le terrage. Il est important que le groupe de socs (15B) de la partie arrière (9) puisse suivre les dénivellations de terrain sans créer une différence de terrage entre les groupes avant et arrière (15A, 15B).

Plus précisément à la lumière de la figure 2, l'organe de commande (22) est constitué de deux vérins hydrauliques (24, 25). Le premier vérin (24) est lié à l'arrière de la partie avant (8) au moyen d'une cinquième articulation (26) d'axe longitudinal et le deuxième vérin (25) est, quant à lui, lié à l'avant de la partie arrière (9) au moyen d'une sixième articulation (27) d'axe longitudinal. Chaque vérin (24, 25) comporte un piston respectif (28, 29) et deux chambres. Ces deux vérins (24, 25) sont avantageusement du type vérin à double effet. Dans cet exemple de réalisation, les vérins (24, 25) sont coaxiaux et réunis l'un à l'autre par leurs corps. Cet organe de commande (22) est connecté à un circuit hydraulique de commande (23) qui permet, d'une manière particulièrement avantageuse, de faire varier la raideur de ladite première articulation (10).

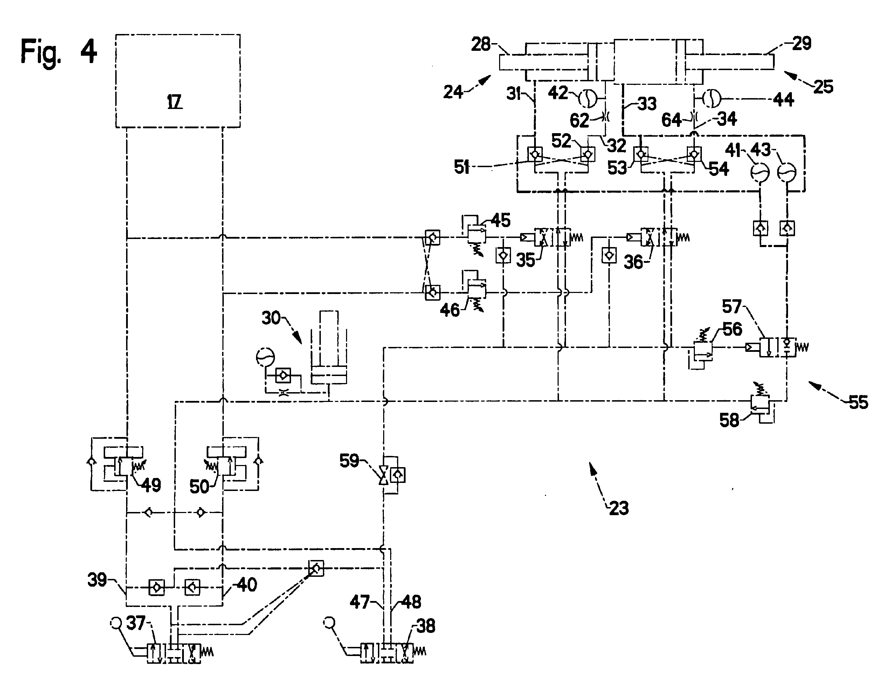

La figure 4 illustre la position des deux vérins hydrauliques (24, 25) lorsque ladite charrue (1) de l'invention est dans une position de travail. Le premier vérin (24) est rétracté alors que le deuxième vérin (25) est allongé. Chaque vérin (24, 25) est alimenté par le circuit hydraulique (23) au moyen de deux conduites (31, 32 ; 33, 34) respectives. Dans cette position, la petite chambre du premier vérin (24) est en communication avec la grande chambre du deuxième vérin (25) via les première et deuxième conduites (31, 33) et la grande chambre du premier vérin (24) est en communication avec la petite chambre du deuxième vérin (25) via les troisième et quatrième conduites (32, 34). Chaque conduite (31 à 34) est reliée à un accumulateur de pression correspondant (41 à 44) qui compense la différence de volume desdites chambres. Sur chacune des conduites (31 à 34) est également disposé un clapet anti-retour piloté (51 à 54). Lesdits clapets (51 à 54) obturent les chambres correspondantes de telle sorte que les deux vérins (24, 25) restent dans leur position, y compris au repos comme illustrée à la figure 4. Ledit piston (28) est rétracté alors que ledit piston (29) est en extension maximale. Un pilote respectif commande l'ouverture du clapet (51 à 54) lorsque le débit du fluide augmente dans la conduite (31 à 34) correspondante, de telle sorte que le fluide peut circuler d'un vérin à l'autre. On a encore prévu une restriction (62, 64) sur les conduites (32, 34) permettant de freiner le mouvement des pistons (28, 29) des deux vérins (24, 25). L'alimentation en fluide de l'une ou l'autre des chambres des vérins (24, 25) est pilotée au moyen de deux distributeurs (35, 36). Le premier distributeur (35) est relié aux conduites (31, 32) alors que le deuxième distributeur (36) est relié aux conduites (33, 34). Les deux distributeurs (35, 36) comporte un tiroir à deux positions, une position normale et une position inverse.

La figure 4 représente le circuit hydraulique de commande (23) correspondant à la position de travail de la charrue (1). On remarque que les conduites (31, 33) sont représentées en traits épais, indiquant que le fluide dans ces conduites (31, 33) est sous pression. La pression régnant dans ces deux conduites (31, 33) donne une flexibilité suffisante à la première articulation (10) pour suivre les ondulations du terrain. Ladite pression dans les conduites (31, 33) permet donc à la partie arrière (9) de la charrue (1) d'assurer un travail correct.

D'une manière préférentielle, lesdits premier et deuxième distributeurs (35, 36) sont pilotés, à leur tour, par l'intermédiaire d'au moins un distributeur (37, 38) situés en amont dans le circuit hydraulique (23). Chaque distributeur (37, 38) comporte, dans cet exemple de réalisation, un tiroir à trois positions, une position centrale de repos, une position normale de travail et une position inverse. Un poussoir manuel est prévu pour pousser ou tirer le tiroir afin de le mettre dans la position désirée. Les distributeurs (37, 38) sont généralement disposés dans la cabine du tracteur (T). Le troisième distributeur (37) alimente notamment les vérins de retournement (17) à l'aide des conduites (39, 40). Le quatrième distributeur (38) commande les premier et deuxième distributeurs (35, 36) via des conduites (47, 48). En agissant sur le troisième distributeur (37), l'utilisateur commande notamment le retournement de l'arrière-train (3) alors qu'en agissant sur le quatrième distributeur (38), il commande le mouvement du chariot (12).

Pour assurer le retournement de la charrue (1), il faut respecter un certain ordre d'alimentation en fluide des vérins pour éviter d'endommager la charrue (1) lors du pivotement de l'arrière-train (3). Il est impératif que le chariot (12) soit en position haute via le dispositif de relevage (16) pour que les corps de labour (15) ne soient plus en contact avec le sol. Le dispositif de relevage (16) est constitué entre autre d'un vérin de relevage (30). Ce dernier est du type vérin à simple effet susceptible de déplacer l'arrière-train (3) de la charrue (1) entre une position basse de labour et une position haute de transport, et vice versa. Dans un premier temps, on alimente donc le vérin de relevage (30) qui se rallonge et relève le chariot (12) et l'arrière-train (3) de la charrue (1). Simultanément, les vérins (24) et (25) bloquent l'articulation (10) dans la position de la figure 4. Puis dans un deuxième temps, ce sont les vérins de retournement (18) qui sont alimentés pour passer à l'autre position de travail, et dans un troisième temps, ce sont le premier et le deuxième vérins (24, 25) de l'organe de commande (22) qui sont alimentés en fluide. Afin de respecter l'ordre de commande pour que l'alimentation en fluide des différents vérins (30, 18, 24, 25) s'effectue chronologiquement, des limiteurs de pression (45, 46, 49, 50) sont intégrés dans le circuit hydraulique (23).

En condition normale d'utilisation, la charrue (1) est dans la configuration de transport pour accéder à une parcelle. L'utilisateur commande un pivotement de 90° de l'arrière-train (3) pour mettre la charrue (1) dans une position de travail et débuter le labour. Arrivé au bout de la parcelle, l'utilisateur va tout d'abord relever l'avant de la charrue (1) au moyen du relevage du tracteur (T) et ensuite pousser sur le troisième distributeur (37) pour engager le cycle de retournement de la charrue (1). Le troisième distributeur (37) est dans sa position normale de travail, la conduite (39) est connectée à la pompe (non représentée) et entraîne l'allongement du vérin de relevage (30). Lorsque celui-ci est allongé, la pression dans cette conduite (39) augmente jusqu'à déclencher un premier limiteur de pression (49) pour alors alimenter les vérins de retournement (18). Le changement d'état du premier limiteur de pression (49) s'effectue lorsque la pression dans la conduite (39) atteint un seuil prédéterminé. Lorsque les vérins de retournement (18) arrivent en bout de course, la pression augmente dans les conduites correspondantes jusqu'à provoquer le déclenchement d'un deuxième limiteur de pression (45). Ce dernier commande alors le premier distributeur (35) qui va passer de sa position normale à sa position inverse. Dans cette position inverse, la grande chambre du premier vérin (24) se remplit de fluide tandis que la petite chambre se vide, le premier vérin (24) s'étend. Le premier piston (28) sort au fur et à mesure que la grande chambre se remplit de fluide et relève la partie arrière (9). Le deuxième distributeur (36) ne change pas de position et le deuxième vérin (25) reste allongé. L'utilisateur maintient son action sur le troisième distributeur (37) tout au long de l'opération de retournement. Pour revenir à l'autre position de travail de la charrue (1) arrivée au bout du champ, l'utilisateur va cette fois tirer sur le tiroir du troisième distributeur (37) pour le mettre dans sa position inverse. C'est alors la conduite (40), avec les limiteurs de pression (50, 46) et le deuxième distributeur (36), qui est alimentée. Pour respecter la chronologie d'alimentation des vérins (30, 18, 24, 25), le seuil de déclenchement des limiteurs de pression (45, 46) est plus élevé que celui des limiteurs de pression (49, 50).

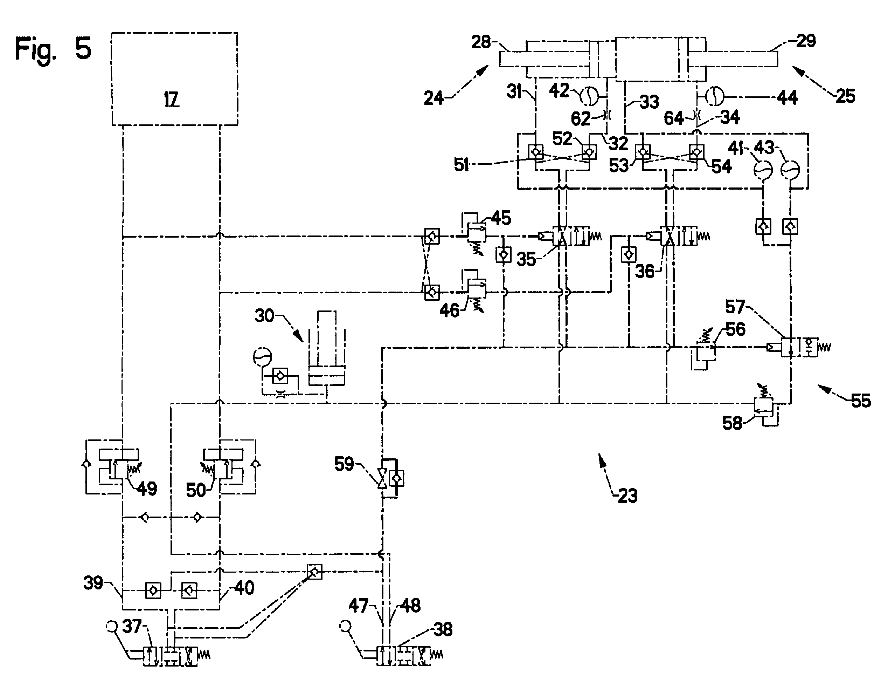

Arrivé dans son autre position de travail, l'utilisateur va descendre le relevage du tracteur (T) pour que le groupe de socs avant (15A) entre en terre. Puis, il va actionner le quatrième distributeur (38) qui va passer de sa position de repos à sa position normale de travail. A la lumière de la figure 5, on voit que le quatrième distributeur (38) est dans sa position normale de travail, la conduite (47) est connectée à la pompe alors que la conduite (48) est branchée au réservoir (non représenté). Dans la position inverse, c'est la conduite (48) qui est connectée à la pompe et la conduite (47) qui est connectée au réservoir. Le troisième distributeur (37) est, pour sa part, dans la position de repos, les deux conduites (39, 40) sont à la même pression.

Dans cette position normale représentée à la figure 5, la conduite (47) est alors alimentée en fluide et le premier et le deuxième distributeurs (35, 36) passent dans leur position inverse entraînant la contraction du premier vérin (24). Pendant ce temps, la conduite (48), connectée au réservoir, provoque la contraction du vérin de relevage (30) et l'abaissement du chariot (12). L'utilisateur maintient son action sur le quatrième distributeur (38) tout au long de l'opération d'abaissement du chariot (12). Par ailleurs, ce quatrième distributeur (38) permet de piloter l'organe de commande (22). En effet, selon la position du piston (28) le mouvement de pivotement de la partie arrière (9) par rapport à la partie avant (8) autour de ladite première articulation (10) est plus ou moins contrarié. L'utilisateur intervient sur ce quatrième distributeur (38) pour obtenir le tarage de la partie arrière (9) préalablement réglé afin de réaliser un travail correct en fonction du terrain à labourer.

Selon une caractéristique importante de l'invention, il est prévu un dispositif réglable à mémoire (55) permettant de définir, de mémoriser et de retrouver cette pression après chaque retournement de l'arrière-train (3). Dans l'exemple de réalisation représenté sur les figures, ledit dispositif réglable à mémoire (55) comporte un limiteur de pression fixe (56), un distributeur à pilotage hydraulique (57) et un limiteur de pression réglable (58).

La figure 5 illustre le circuit hydraulique de commande (23) avec le dispositif réglable à mémoire (55) actionné. Sur la représentation de la figure 5, le dispositif réglable à mémoire (55) est représenté juste avant l'installation de la pression de tarage dans le circuit hydraulique (23). L'utilisateur actionne le quatrième distributeur (38) et la conduite (47) est alors connectée à la pompe. Les deux distributeurs (35, 36) passent dans leur position inverse. Lorsque les deux distributeurs (35, 36) ont changé d'état, la pression du fluide dans la conduite (47) augmente jusqu'à atteindre un seuil prédéterminé et provoquer le déclenchement du limiteur de pression fixe (56). Lorsque le limiteur de pression fixe (56) est déclenché, le distributeur (57) est activé et change de position. Il laisse alors passer le fluide vers le limiteur de pression réglable (58), qui se déclenche, et laisse circuler le fluide vers la conduite (48). Le dispositif réglable à mémoire (55) permet ainsi de purger les conduites (31, 33). Le fluide dans ces deux conduites (31, 33) s'évacue vers le réservoir du tracteur (T) jusqu'à ce que la pression du fluide diminue et devienne égale au seuil prédéterminé, ce qui entraîne le changement d'état du limiteur de pression réglable (58). D'une manière particulièrement avantageuse, l'utilisateur peut régler le seuil de déclenchement du limiteur de pression réglable (58). L'utilisateur peut ainsi contrarier le mouvement de pivotement de la partie arrière (9) grâce à ce limiteur de pression réglable (58). La pression du fluide régnant dans les conduites (31 à 34) détermine la raideur de ladite première articulation (10). La plage de réglage du limiteur de pression réglable (58) est relativement grande. Lorsque la valeur de ce seuil est élevée, la première articulation (10) est alors plutôt raide, au contraire lorsque la valeur du seuil est faible, le pivotement de la partie arrière (9) est plutôt libre autour de la première articulation (10). La raideur de la première articulation (10) lors du travail, est déterminée par la pression régnant dans les conduites (31, 33).

D'une manière préférentielle, lors du premier passage dans une parcelle, l'utilisateur règle la pression de tarage de la partie arrière (9) en fonction de son comportement et lorsqu'il obtient un fonctionnement correct adapté aux conditions du terrain, il bloque et mémorise alors le seuil qui déclenchera le limiteur de pression réglable (58). Grâce à ce dispositif réglable à mémoire (55), l'utilisateur n'est donc plus contraint d'intervenir sur ledit quatrième distributeur (38) pour ajuster la position de l'organe de commande (22) en début de raie après chaque retournement pour alterner les positions de travail de l'arrière-train (3). Mais, l'utilisateur retrouvera automatiquement la pression de tarage mémorisée lors du réglage en début de champ. Le fluide du circuit hydraulique (23) retourne au réservoir du tracteur (T) jusqu'à ce que la pression dans les conduites (31, 33) baisse et que le limiteur de pression réglable (58) se ferme. On dit encore qu'on purge les conduites (31, 33). La figure 5 montre le circuit hydraulique (23) quelques instants avant que le limiteur de pression réglable (58) se déclenche, juste avant la purge. On obtient ainsi un labour homogène entre les parties avant et arrière (8, 9) et tout au long de la parcelle. L'utilisateur peut alors se concentrer davantage sur la conduite du tracteur (T).

En pratique, le relevage de cette partie arrière (9) à la fin du retournement va permettre une entrée en terre décalée entre les corps de labour (15) de la partie avant (8) et ceux de la partie arrière (9). Ceci permet de limiter la bande de terre non travaillée où tourne, à l'extrémité d'un champ, le tracteur et la charrue (1). Dans un sol argileux, il faut plus ou moins forcer la partie arrière (9) à se mettre en terre, c'est-à-dire rigidifier la première articulation (10) pour assurer une mise en terre courte et éviter les refus. Lorsque la mise en terre est réalisée, la première articulation (10) est rendue plus souple pour que le groupe de socs arrière (15B) puissent bien suivre les inégalités du terrain.

Dans l'exemple de réalisation représenté sur les figures 4 et 5, ladite charrue (1) comporte encore un robinet (59) branché sur la conduite (47). Ce robinet (59) permet, lorsqu'il est ouvert, l'alimentation en fluide jusqu'aux premier et deuxième distributeurs (35, 36) comme décrit précédemment. Par contre lorsqu'il est fermé, le robinet (59) bloque l'alimentation en fluide des distributeurs (35, 36). La partie arrière (9) reste alors relevée après l'abaissement du chariot (12) et n'entrera pas en terre. Dans cette configuration, il est donc possible de travailler uniquement en utilisant le groupe de socs avant (15A). Une telle configuration de la charrue (1) est représentée à la figure 3. L'utilisateur peut ainsi adapter sa charrue (1) aux conditions de travail de passages difficiles. Ceci lui permet aussi d'augmenter l'adhérence des roues du tracteur (T) lors d'un labour en côte par exemple. Cette configuration est encore avantageuse lors de la finition d'un champ, la partie arrière (9) peut alors passer au-dessus d'un semis ou d'une parcelle voisine sans l'endommager.

Dans l'exemple de réalisation de la charrue (1) représentée aux figures, la poutre (7) est, d'une manière particulièrement avantageuse divisée en trois parties. Une partie médiane (60) relie la partie arrière (9) à la partie avant (8). La partie médiane (60) est articulée sur les parties avant et arrière (8, 9) via des articulations respectives d'axe longitudinal sensiblement vertical dans la position de travail. La partie médiane (60) ne porte pas de corps de labour (15) mais elle est destinée à supporter le chariot (12). Sur la figure 1 représentant la charrue (1) derrière un tracteur (T), la partie médiane (60) est dirigée globalement dans la direction d'avance (A) tandis que les parties avant et arrière (8, 9) sont disposées obliquement par rapport à cette direction d'avance (A). La partie avant (8) est parallèle à la partie arrière (9). La charrue (1) conforme à l'invention comporte par ailleurs des moyens pour ajuster l'orientation des parties avant et arrière (8, 9) par rapport à la partie médiane (60). Ces moyens sont constitués dans le cas présent de vérins hydrauliques du type vérin à double effet.

La charrue qui vient d'être décrite n'est qu'un exemple de réalisation et d'utilisation qui ne saurait en aucun cas limiter le domaine de protection défini par les revendications suivantes. Différentes modifications restent possibles, notamment en ce qui concerne la constitution des divers éléments ou par substitution d'équivalents techniques.

## Revendications

1. Charrue (1) semi-portée réversible comprenant un avant-train (2) raccordé à un arrière-train (3), l'arrière-train (3) comportant une poutre (7), avec des corps de labour (15), qui est divisée en une partie avant (8) et une partie arrière (9), et un bloc de retournement (17), ladite partie arrière (9) étant liée à la partie avant (8) au moyen d'une première articulation (10) d'axe horizontal et transversal dans la configuration de travail, le pivotement autour de cette première articulation (10) étant contrôlé par un organe de commande (22), lequel est lié sur ladite partie avant (8) et sur ladite partie arrière (9), l'organe de commande (22) étant piloté par l'intermédiaire d'un circuit hydraulique (23) comportant au moins un distributeur (35, 36, 37, 38), ***caractérisée par le fait* qu'**il est prévu un dispositif réglable à mémoire (55) permettant de définir une pression dans le circuit hydraulique (23) et de mémoriser cette pression pour pouvoir la retrouver après chaque retournement de l'arrière-train (3), ledit dispositif réglable à mémoire (55) comporte un limiteur de pression fixe (56) un distributeur à commande hydraulique (57) et un limiteur de pression réglage (58).

2. Charrue selon la revendication 1, ***caractérisée par le fait* que** ledit organe de commande (22) comporte un premier vérin (24) lié à ladite partie avant (8) via une cinquième articulation (26) et un deuxième vérin (25) lié à ladite partie arrière (9) via une sixième articulation (27).

3. Charrue selon la revendication 2, ***caractérisée par le fait* que** ledit circuit hydraulique (23) comporte un premier distributeur (35) et un deuxième distributeur (36), lesdits deux distributeurs (35, 36) sont pilotés par un troisième distributeur (37) et un quatrième distributeur (38) et sont reliés auxdits premier et deuxième vérins (24, 25) au moyen de conduites respectives (31 à 34).

4. Charrue selon l'une quelconque des revendications 1 à 3, ***caractérisée par le fait* que** ledit dispositif réglable à mémoire (55) est piloté par ledit quatrième distributeur (38).

5. Charrue selon l'une quelconque des revendications 1 à 4, ***caractérisée par le fait* que** ledit dispositif réglable à mémoire (55) est activé lorsque ledit limiteur de pression fixe (56) a atteint le seuil prédéterminé pour son déclenchement.

6. Charrue selon l'une quelconque des revendications 1 à 5, ***caractérisée par le fait* que** lorsque ledit limiteur de pression fixe (56) est déclenché, ledit distributeur à commande hydraulique (57) est activé.

7. Charrue selon l'une quelconque des revendications 1 à 6, ***caractérisée par le fait* que** lorsque ledit distributeur à commande hydraulique (57) est activé, le fluide des conduites (31, 33) retourne au réservoir du tracteur (T) grâce au limiteur de pression réglable (58).

8. Charrue selon la revendication 7, ***caractérisée par** le fait* le fluide des conduites (31, 33) retourne au réservoir du tracteur (T) jusqu'à la fermeture dudit limiteur de pression réglable (58).

9. Charrue selon l'une quelconque des revendications 3 à 8, ***caractérisée par le fait* que** ledit troisième distributeur (37) pilote un seul desdits distributeurs (35, 36), soit ledit premier distributeur (35) ou soit ledit deuxième distributeur (36).

10. Charrue selon l'une quelconque des revendications 3 à 9, ***caractérisée par le fait* que** ledit quatrième distributeur (38) pilote simultanément ledit premier distributeur (35) et ledit deuxième distributeur (36).

## Claims

1. Reversible semi-mounted plough (1) including a fore-carriage (2) connected to a hind-carriage (3), the hind-carriage (3) comprising a beam (7), with plough bodies (15), which is divided into a front part (8) and a rear part (9), and a turning block (17), the said rear part (9) being connected to the front part (8) by means of a first articulation (10) having a horizontal and transverse axis in the work configuration, the pivoting about this first articulation (10) being controlled by a control element (22), which is connected on the said front part (8) and on the said rear part (9), the control element (22) being driven by means of a hydraulic circuit (23) comprising at least one distributor (35, 36, 37, 38), ***characterized in* that** an adjustable device with memory (55) is provided, making it possible to define a pressure in the hydraulic circuit (23) and to store this pressure to be able to retrieve it after each turn of the hind-carriage (3), the said adjustable device with memory (55) comprises a fixed pressure limiter (56), a hydraulic control distributor (57) and an adjustable pressure limiter (58).

2. Plough according to Claim 1, ***characterized in* that** the said control element (22) comprises a first jack (24) connected to the said front part (8) via a fifth articulation (26) and a second jack (25) connected to the said rear part (9) via a sixth articulation (27).

3. Plough according to Claim 2, ***characterized in* that** the said hydraulic circuit (23) comprises a first distributor (35) and a second distributor (36), the said two distributors (35, 36) are driven by a third distributor (37) and a fourth distributor (38) and are connected to the said first and second jacks (24, 25) by means of respective pipes (31 to 34).

4. Plough according to any one of Claims 1 to 3, ***characterized in* that** the said adjustable device with memory (55) is driven by the said fourth distributor (38).

5. Plough according to any one of Claims 1 to 4, ***characterized in* that** the said adjustable device with memory (55) is activated when the said fixed pressure limiter (56) has reached the predetermined threshold for its actuation.

6. Plough according to any one of Claims 1 to 5, ***characterized in* that** when the said fixed pressure limiter (56) is actuated, the said hydraulic control distributor (57) is activated.

7. Plough according to any one of Claims 1 to 6, ***characterized in* that** when the said hydraulic control distributor (57) is activated, the fluid of the pipes (31, 33) returns to the reservoir of the tractor (T) owing to the adjustable pressure limiter (58).

8. Plough according to Claim 7, ***characterized in* that** the fluid of the pipes (31, 33) returns to the reservoir of the tractor (T) up to the closure of the said adjustable pressure limiter (58).

9. Plough according to any one of Claims 3 to 8, ***characterized in* that** the said third distributor (37) drives solely one of the said distributors (35, 36), either the said first distributor (35) or the said second distributor (36).

10. Plough according to any one of Claims 3 to 9, ***characterized in* that** the said fourth distributor (38) drives simultaneously the said first distributor (35) and the said second distributor (36).

## Patentansprüche

1. Aufsatteldrehpflug (1) mit einem Fahrgestell (2), das an ein Hintergestell (3) angeschlossen ist, wobei das Hintergestell (3) einen Träger (7) mit Pflugkörper (15) umfasst, der in einen vorderen Teil (8) und einen hinteren Teil (9) geteilt ist, und einen Wendeblock (17), wobei der hintere Teil (9) mit dem vorderen Teil (8) mittels eines ersten Gelenks (10) mit einer Horizontal- und Transversalachse in der Arbeitsausführung verbunden ist, wobei das Schwenken um dieses erste Gelenk (10) von einem Steuerelement (22) kontrolliert wird, welches mit dem vorderen Teil (8) und dem hinteren Teil (9) verbunden ist, wobei das Steuerelement (22) über einen Hydraulikkreis (23) gesteuert wird, der mindestens einen Verteiler (35, 36, 37, 38) umfasst, ***dadurch gekennzeichnet,* dass** eine verstellbare Vorrichtung (55) mit Speicher vorgesehen ist, die es ermöglicht, einen Druck in dem Hydraulikkreis (23) zu definieren und diesen Druck zu speichern, um ihn nach jedem Wenden des Hintergestell (3) wieder einzusetzen, wobei die verstellbare Vorrichtung (55) mit Speicher einen festen Druckbegrenzer (56), einen hydraulisch gesteuerten Verteiler (57) und einen einstellbaren Druckbegrenzer (58) umfasst.

2. Pflug nach Anspruch 1, ***dadurch gekennzeichnet,* dass** das Steuerelement (22) einen ersten Zylinder (24), der mit dem vorderen Teil (8) über ein fünftes Gelenk (26) verbunden ist, und einen zweiten Zylinder (25) umfasst, der mit dem hinteren Teil (9) über ein sechstes Gelenk (27) verbunden ist.

3. Pflug nach Anspruch 2, ***dadurch gekennzeichnet,* dass** der Hydraulikkreis (23) einen ersten Verteiler (35) und einen zweiten Verteiler (36) umfasst, dass die beiden Verteiler (35, 36) von einem dritten Verteiler (37) und einem vierten Verteiler (38) gesteuert werden und mit dem ersten und zweiten Zylinder (24, 25) mittels jeweiligen Leitungen (31 bis 34) verbunden sind.

4. Pflug nach irgend einem der Ansprüche 1 bis 3, ***dadurch gekennzeichnet,* dass** die verstellbare Vorrichtung mit Speicher (55) vom vierten Verteiler (38) gesteuert wird.

5. Pflug nach irgend einem der Ansprüche 1 bis 4, ***dadurch gekennzeichnet,* dass** die verstellbare Vorrichtung mit Speicher (55) aktiviert wird, wenn der feste Druckbegrenzer (56) die für sein Auslösen vorbestimmte Schwelle erreicht hat.

6. Pflug nach irgend einem der Ansprüche 1 bis 5, ***dadurch gekennzeichnet,* dass**, wenn der feste Druckbegrenzer (56) ausgelöst wird, der hydraulisch gesteuerte Verteiler (57) aktiviert wird.

7. Pflug nach irgend einem der Ansprüche 1 bis 6, ***dadurch gekennzeichnet,* dass**, wenn der hydraulisch gesteuerte Verteiler (57) aktiviert wird, das Fluid der Leitungen (31, 33) zum Behälter des Traktors (T) dank des verstellbaren Druckbegrenzers (58) zurückkehrt.

8. Pflug nach Anspruch 7, ***dadurch gekennzeichnet,* dass** das Fluid der Leitungen (31, 33) zum Behälter des Traktors (T) bis zum Verschluss des verstellbaren Druckbegrenzers (58) zurückkehrt.

9. Pflug nach irgend einem der Ansprüche 3 bis 8, ***dadurch gekennzeichnet,* dass** der dritte Verteiler (37) nur einen der Verteiler (35, 36) steuert, entweder den ersten Verteiler (35) oder den zweiten Verteiler (36).

10. Pflug nach irgend einem der Ansprüche 3 bis 9, ***dadurch gekennzeichnet,* dass** der vierte Verteiler (38) gleichzeitig den ersten Verteiler (35) und den zweiten Verteiler (36) steuert.
